(19) Europäisches Patentamt
European Patent Office
Office européen des brevets

(11) EP 2 781 633 A1

(12) # EUROPÄISCHE PATENTANMELDUNG

(43) Veröffentlichungstag:
**24.09.2014 Patentblatt 2014/39**

(51) Int Cl.:
***D02G 3/02*** *(2006.01)* ***D01F 2/06*** *(2006.01)*

(21) Anmeldenummer: **13159780.9**

(22) Anmeldetag: **18.03.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder:
- **Continental Reifen Deutschland GmbH
30165 Hannover (DE)**
- **Cordenka GmbH & Co. KG
63784 Obernburg (DE)**

(72) Erfinder:
- **Justine, Carole, Dr.
31535 Scharrel (DE)**
- **Kramer, Thomas, Dr.
32049 Herford (DE)**
- **Wahl, Günter, Dr.
31249 Hohenhameln/Clauen (DE)**
- **Mössinger, Dennis Rolf, Dr.
64295 Darmstadt (DE)**
- **Scheytt, Holger, Dr.
63906 Erlenbach (DE)**
- **Zimmerer, Britta
63916 Amorbach (DE)**
- **Uihlein, Kurt, Dr.
63920 Großheubach (DE)**
- **Wunderlich, David, Dr.
63843 Niedernberg (DE)**

(74) Vertreter: **Preusser, Andrea
Continental Aktiengesellschaft
Intellectual Property
Vahrenwalder Strasse 9
30165 Hannover (DE)**

(54) **Hybridkord aus wenigstens zwei miteinander verdrehten Multifilamentgarnen**

(57) Die Erfindung betrifft einen Hybridkord aus wenigstens zwei miteinander verdrehten Multifilamentgarnen, wobei das erste Multifilamentgarn ein Viskose-Multifilamentgarn ist und wobei das weitere Multifilamentgarn ein Nicht-metallisches-Multifilamentgarn ist, welches aus Material besteht, das nicht mit dem ersten Multifilamentgarn identisch ist.

Das Viskose-Multifilamentgarn wurde im Normklima gemäß DIN EN ISO 139-1:2005 konditioniert, weist danach einen Garntiter < 1100 dtex und eine Bruchfestigkeit von ≥ 45 cN/tex auf. Der Hybridkord weist einen Kordtiter ≤ 3000 dtex auf.

EP 2 781 633 A1

## Beschreibung

Die Erfindung betrifft einen Hybridkord aus wenigstens zwei miteinander verdrehten Multifilamentgarnen, wobei das erste Multifilamentgarn ein Viskose-Multifilamentgarn ist und wobei das weitere Multifilamentgarn ein Nicht-metallisches-Multifilamentgarn ist, welches aus einem Material besteht, das nicht mit dem Material des ersten Multifilamentgarnes identisch ist.

Hybridkorde sind Festigkeitsträger, die als verstärkende, fadenförmige Elemente beispielsweise in technischen Gummiprodukten und Fahrzeug(luft)reifen Verwendung finden.

Hybridkorde sind dem Fachmann hinreichend bekannt und zeichnen sich dadurch aus, dass die wenigstens zwei Garne dieses Hybridkordes aus unterschiedlichen Materialen bestehen. Hierdurch ist es ermöglicht, die physikalischen Eigenschaften des Hybridkordes einerseits durch gezielte Materialauswahl der einzelnen Garne und andererseits durch deren Konstruktion einzustellen.

Aus der DE 10 2009 003 359 A1 ist beispielsweise ein Hybidkord zur Verwendung in einem Fahrzeugluftreifen bekannt geworden, der aus einem Rayon-Multifilamentgarn und aus einem PET-Multifilamentgarn besteht. Der Garntiter des Rayon-Multifilamentgarnes beträgt 1840 dtex, der Garntiter des PET-Multifilamentgarnes beträgt 1440 dtex. Der Hybridkord weist einen bisher üblichen Durchmesser auf. Das Rayon-Multifilamentgarn zählt zu den Viskose-Multifilamentgarnen.

Man ist jedoch aus Gründen der Kostenersparnis bestrebt, Festigkeitsträger mit geringerem Durchmesser einzusetzen, wobei diese Festigkeitsträger jedoch in etwa gleiche physikalische Eigenschaften wie Festigkeitsträger mit üblichem Durchmesser aufweisen sollen.

Weiterhin ist man bestrebt, möglichst nachwachsende Rohstoffe zu verwenden.

Weltweit ist Cellulose das häufigste und bedeutendste natürlich vorkommende Polymer. Neben cellulosischen Formkörpern wie Papier, Blasfolien, Cellophan und Schwammtüchern, zählen Cellulosefasern zu den bedeutsamen technischen Produkten, die vor allem für Bekleidungszwecke, als Dämm-Materialien und als technische Festigkeitsträger Anwendung finden.

Cellulosische Fasern, Filamente und Multifilamente können auf vielfältigen Wegen und in unterschiedlichen Formen erhalten werden, die gleichfalls der Fachwelt bekannt und geläufig sind. Die gängigsten Verfahren sind die sog. Regenerat-Verfahren, bei denen Cellulose zunächst chemisch zu löslichen labilen oder einfach verseifbaren Derivaten umgesetzt und gelöst wird. Als lösliche Derivate, aus denen Cellulose regeneriert werden kann, sind z.B. Celluloseacetat, Celluloseformiat oder Cellulosecarbamat bekannt. Im bedeutendsten Verfahren, dem Viskose-Verfahren ist das labile Derivat eine Cellulosexanthogenat und die mit dem Viskoseverfahren hergestellten Garne sind als Viskose- oder Rayon-Garne bekannt. Im Viskoseverfahren wird die Lösung durch Spinndüsen gepumpt, in einem Fällbad zu Viskose-Filamenten regeneriert, in einem oder mehreren Nachbehandlungsschritten gewaschen und geschlichtet (und ggf. funktional beschichtet) und abschließend entweder auf Endlosspulen gewickelt oder zu Faserschnitt verarbeitet. In neuerer Zeit finden cellulosische Fasern in Form von Faserkurzschnitt aber auch vermehrt Anwendung in der Thermoplast-verstärkung, z.B. in PP-Rayon-Verbundwerkstoffen, in Form uni- und bidirektionaler Gewebe auch zur Verstärkung von Duromeren wie z.B. Epoxidharzen.

Hochfeste cellulosische Multifilamentgarne mit niedrigem Garntiter, also geringerem Garndurchmesser, sind an sich bekannt.

Beispielsweise sind ultrahochfeste Garne aus Celluloseformiat und aus mit Formaldehydmodifizierter Cellulose mit geringem Gesamttiter bekannt. So werden in der Patentschrift US 6,261,689 Celluloseformiat-Fasern beschrieben, die gemäß dem in EN ISO 20139 (aktuell: DIN EN ISO 139) definierten Normalklima bei einer Temperatur von (20 $\pm$ 2) °C und einer relativen Feuchte von (65 $\pm$ 2) % konditioniert wurden und einen Gesamttiter von 460 dtex und eine Festigkeit von 76 cN/tex aufweisen. Die Patentschrift US 3,388,117 beschreibt mit Formaldehyd modifizierte cellulosische Fasern mit einem Gesamttiter von 485 dtex und einer konditionierten Festigkeit von 78 cN/tex.

Nicht beschrieben im Stand der Technik sind jedoch hochfeste Viskose-Multifilamentgarne mit einem Gesamttiter < 1100 dtex.

Die GB 685,631 B beschreibt zwar Rayon-Garne, also Viskose-Multifilamentgarne aus 100 Einzelfilamenten mit einem geringem Gesamttiter von 100 den (110 dtex), jedoch mit einer konditionierten Festigkeit von nur 2,3 g/den (20,4 cN/tex) und mit einer Festigkeit im ofentrockenen Zustand von 2,9 g/den (25,6 cN/tex). In einem weiteren Beispiel offenbart GB 685,631 B Garne mit einem Garntiter von 400 den (440 dtex) mit 260 Filamenten und moderate Festigkeiten von 4,1 g/den (36,2 cN/tex) im konditionierten bzw.
5,3 g/den (46,8 cN/tex) im ofentrockenen
Viskose-Multifilamentgarn.

Der vorliegenden Erfindung liegt die Aufgabe zugrunde, einen umweltfreundlichen Hybridkord bereitzustellen, der einen vergleichsweise geringen Durchmesser aufweist, dessen physikalische Eigenschaften jedoch etwa denen von Hybridkorden heute üblichen Durchmessers entspricht.

Die Aufgabe wird gelöst, indem das Viskose-Multifilamentgarn im Normklima gemäß DIN EN ISO 139-1:2005 konditioniert wurde und danach einen Garntiter < 1100 dtex und eine Bruchfestigkeit von ≥ 45 cN/tex aufweist und der Hybridkord einen Kordtiter < 3000 dtex aufweist.

Somit ist diese Festigkeitslücke bei Regeneratcellulosefasern mit geringem Gesamttiter durch ein Viskose-Multifilamentgarn, das im Normalklima gemäß DIN EN ISO 139-1:2005 konditioniert wurde und danach einen Garntiter von < 1100 dtex und eine Bruchfestigkeit von ≥ 45 cN/tex aufweist, geschlossen.

Es ist erfindungsgemäß ein umweltfreundlicher Hybridkord geschaffen, der aufgrund des geringen Garntiters des Viskose-Multifilamentgarnes einen geringen Durchmesser aufweist. Durch die dennoch hohe Bruchfestigkeit des "dünnen" Viskose-Multifilamentgames weist der Hybridkord in etwa die gleichen physikalischen Eigenschaften wir ein dickerer, vergleichbarer Hybridkord des Standes der Technik auf.

Der erfindungsgemäße Hybridkord kann aus zwei oder mehr Multifilamentgarnen bestehen, von denen ein erstes Multifilamentgarn immer ein vorbeschriebenes "dünnes" Viskose-Multifilamentgarn ist, von denen ein zweites Multifilamentgarn immer aus einem Material besteht, das nicht mit dem ersten Multifilamentgarn identisch ist. Der Hybridkord kann jedoch auch drei oder mehr Multifilamentgarne aufweisen, von denen ein drittes Multifilamentgarn oder weiteres Multifilamentgarn mit dem Material des ersten oder zweiten Multifilamentgarns identisch sein oder aber aus einem weiteren nicht-metallischen Material bestehen kann.

Die Messung der konditionierten textilen Daten des erfindungsgemäßen Viskose-Multifilamentgarns erfolgt gemäß DIN EN ISO 2062:2009 unter folgenden Bedingungen:

- Konditionierungszeiten von ≥ 16 h im Normalklima
- CRE [constant rate of extension = konstante Dehngeschwindigkeit]-Zugprüfmaschine mit pneumatischen Klemmen
- Prüfung von Multifilamentgarnen mit Schutzdrall 100 t/m

$$(t/m = turns/m = Umdrehungen\ pro\ Meter)$$

- Einspannlänge der Prüfstücke: 500 mm
- Zuggeschwindigkeit (Traversengeschwindigkeit): 500 mm/min (100 %/min)

Die in den vorstehend genannten Normen erwähnten Konditionierungs- und Prüfbedingungen sind vergleichbar mit der einschlägigen Norm der Chemiefaserindustrie (BISFA "Testing methods for viscose, cupro, acetate, triacetate and lyocell filament yarns", 2007 Edition).

Das Viskose-Multifilamentgarn wird überraschenderweise dadurch erhalten, dass das in Beispiel 2 der GB 685,631 beschriebene Verfahren hinsichtlich mehrerer technischer Merkmale abgeändert wird, die im Folgenden beschrieben werden.

- Anstelle von Baumwoll-Linters wurden Zellstoffe aus Nadelholz eingesetzt.

- Es werden vor dem Spinnprozess Viskose-Modifikatoren (z.B. Aminethoxylate wie ethoxylierte Fettsäureamine oder Polyethylenglykole wie PEG 1500) in einer Konzentration im Bereich von 0,01 bis 1,0 Gew.-% bezogen auf Viskose zugesetzt.

- Es werden Spinndüsen mit Lochdurchmesser < 100 μm verwendet, vorzugsweise mit einem Lochdurchmesser im Bereich von 40 bis 80 μm.

- Die Spinngeschwindigkeit an der ersten Aufnahmerolle beträgt weniger als 50 m/min und liegt vorzugsweise im Bereich von 10 bis 40 m/min.

- Der Transport des Fadens aus der Spinndüse in das Koagulationsbad erfolgt durch ein Spinnrohr, wobei der Transport des Fadens im Spinnrohr durch eine Strömung des Koagulationsbads in Richtung des Faserabzugs unterstützt wird.

- Die Schwefelsäurekonzentration im Koagulationsbad ist größer als 15 g/Liter und liegt vorzugsweise im Bereich von 20 bis 120 g/Liter.

- Dem Koagulationsbad werden Natriumsulfat und Zinksulfat zugesetzt, vorzugsweise in einer Konzentration von 25 bis 250 g/LiterKoagulationsbad.

- Die Temperatur des Koagulationsbads beträgt mehr als 30 °C und liegt vorzugsweise im Bereich von 40 bis 95 °C.
- Das nachgelagerte Fixierbad enthält Schwefelsäure, vorzugsweise in einer Konzentration im Bereich von 20 bis 120 g/LiterFixierbad und dient auch als Zersetzungsbad für Cellulosexanthogenat.
- Das ersponnene Garn wird stärker als auf 175 % verstreckt, vorzugsweise liegt die Verstreckung in einem Bereich von 180 bis 220 %.
- Das erfindungsgemäße Viskose-Multifilamentgarn wird vorzugsweise in einem Zweistufenprozess hergestellt, wobei in der ersten Stufe das Garn ersponnen und aufgewickelt und in der zweiten Stufen das aufgewickelte Garn abgewickelt und verstreckt wird.

Vorteilhaft ist es, wenn das weitere Multifilamentgarn einen Garntiter im Bereich von ≥ 50 und ≤ 1800 dtex, vorzugsweise im Bereich von ≥ 200 und ≤ 1200 dtex, besonders bevorzugt im Bereich von ≥ 250 und ≤ 800 dtex aufweist. Es ist ein Hybridkord geschaffen, dessen Garne jeweils einen geringen Garntiter und somit einen geringen Gesamtdurchmesser aufweist, dessen physikalische Eigenschaften jedoch in etwa denen von Hybridkorden mit heute üblichen Durchmessern entspricht.

Vorteilhaft ist es, wenn der Hybridkord einen Kordtiter ≤ 2500 dtex, bevorzugt einen Kordtiter ≤ 2000 dtex aufweist. Es ist ein dünner Hybridkord geschaffen.

Vorteilhaft ist es, wenn das Viskose-Multifilamentgarn einen Garntiter im Bereich von ≥ 150 dtex bis < 1100 dtex und eine Bruchfestigkeit im Bereich von ≥ 45 cN/tex bis ≤ 60 cN/tex aufweist. Die hohe Bruchfestigkeit pro dtex erlaubt in Bezug auf die Bruchkraft einen dünnen Garntiter.

Zweckmäßig ist es, wenn das Viskose-Multifilamentgarn einen Garntiter im Bereich von ≥ 170 dtex bis < 900 dtex, vorzugsweise von ≥ 200 dtex bis < 800 dtex und eine Bruchfestigkeit im Bereich von ≥ 45 cN/tex bis ≤ 56 cN/tex, vorzugsweise von ≥ 45 cN/tex bis ≤ 53 cN/tex aufweist. Hierdurch werden Vorteile in Bezug auf die Ermüdungseigenschaften eines technischen Gummiproduktes oder eines Fahrzeugluftreifens, der den erfindungsgemäßen Hybridkord einsetzt, sowie in Bezug auf die Prozessfähigkeit erzielt.

Vorteilhaft ist es in Bezug auf die Ermüdungsbeständigkeit eines Fahrzeugluftreifens, der eine Verstärkungslage als Karkasslage und/oder Gürtelbandage und/oder Wulstverstärker, enthaltend den erfindungsgemäßen Hybridkord, aufweist, wenn das Viskose-Multifilamentgarn einen Filament-Titer im Bereich von 1,2 und 4,0 dtex, vorzugsweise von 2,4 und 3,0 dtex aufweist.

Zweckmäßig ist es, wenn das Viskose-Multifilamentgarn eine Bruchdehnung im Bereich von ≥ 5 % und ≤ 20 %, vorzugsweise von ≥ 6 % und ≤ 15 % aufweist. Ein technisches Gummiprodukt oder ein Fahrzeugreifen mit einem derartigen Festigkeitsträger ist ermüdungsbeständiger, auch bei extremen Bedingungen.

Das Viskose-Multifilamentgarn ist ein Rayon-Multifilamentgarn oder ein Lyocell-Multifilamentgarn.

In einer weiteren Ausführung der Erfindung ist das weitere Nicht-metallische Multifilamentgarn ein Polyamid-Multifilamentgarn, vorzugsweise ein PA66-Multifilamentgarn. Es ist ein höherer E-Modul und geringerer Schrumpf sowie eine höhere Stabilität bei geringem Korddurchmesser als beispielsweise bei einer Kordkonstruktion PA66 940 x 2 erreicht.

In einer ersten, bevorzugten Ausführung der Erfindung besteht der Hybridkord aus zwei Multifilamentgarnen, von denen das erste Multifilamentgarn ein Rayon-Multifilamentgarn und das weitere Multifilamentgarn ein PA66-Multifilamentgarn ist. Der Hybridkord weist die Konstruktion Rayon 780x1 + PA66 700x1, 450 tpm S(Z) + 450 tpm S(Z), 450 tpm Z(S) auf. Die Filamente eines jeden Rayon-Multifilamentgarnes weisen einen Filament-Titer von 3 dtex auf. Die Bruchfestigkeit eines Rayon-Multifilamentgarnes liegt im Bereich von ≥ 45 cN/tex bis ≤ 53 cN/tex. Jedes Rayon-Multifilamentgarn weist eine Bruchdehnung im Bereich von ≥ 6 % und ≤ 15 % auf. Der Hybridkord weist einen Durchmesser von 0,48 mm auf. Weitere Parameter des Hybridkordes sind der Tabelle 1 zu entnehmen.

In einer zweiten, bevorzugten Ausführung der Erfindung besteht der Hybridkord aus zwei Multifilamentgarnen, von denen das erste Multifilamentgarn ein Rayon-Multifilamentgarn und das weitere Multifilamentgarn ein Aramid-Multifilamentgarn ist. Der Hybridkord weist die Konstruktion Rayon 620x1 + Aramid 550x1, 600 tpm S(Z) + 600 tpm S(Z), 600 tpm Z(S) auf. Die Filamente eines jeden Rayon-Multifilamentgarnes weisen einen Filament-Titer von 2,4 dtex auf. Die Bruchfestigkeit eines Rayon-Multifilamentgarnes liegt im Bereich von ≥ 45 cN/tex bis ≤ 53 cN/tex. Jedes Rayon-Multifilamentgarn weist eine Bruchdehnung im Bereich von ≥ 6 % und ≤ 15 % auf. Der Hybridkord weist einen Durchmesser von 0,40 mm auf. Weitere Parameter des Hybridkordes sind der Tabelle 1 zu entnehmen.

In einer dritten, bevorzugten Ausführung der Erfindung besteht der Hybridkord aus drei Multifilamentgarnen, von denen das erste Multifilamentgarn ein Rayon-Multifilamentgarn, das zweite Multifilamentgarn ein Aramid-Multifilamentgarn und das dritte Multifilamentgarn ein mit dem ersten Multifilamentgarn identisches Rayon-Multifilamentgarn ist. Der Hybridkord weist die Konstruktion Rayon 620 x 1+ Aramid 550x1 + Rayon 620x1, 600 tpm S(Z) + 600 tpm S(Z) + 600 tpm S(Z)), 600 tpm Z(S) auf. Die Filamente eines jeden Rayon-Multifilamentgarnes weisen einen Filament-Titer von 2,4 dtex auf. Die Bruchfestigkeit eines Rayon-Multifilamentgarnes liegt im Bereich von ≥ 45 cN/tex bis ≤ 53 cN/tex. Jedes Rayon-Multifilamentgarn weist eine Bruchdehnung im Bereich von ≥ 6 % und ≤ 15 % auf. Der Hybridkord weist einen Durchmesser von 0,50 mm auf. Weitere Parameter des Hybridkordes sind der Tabelle 1 zu entnehmen.

In einer weiteren Ausführung der Erfindung ist das erste Multifilamentgarn ein Rayon-Multifilamentgarn und das weitere Multifilamentgarn ein HMLS PET-Multifilamentgarn, wobei der Hybridkord die Konstruktion Rayon 620x1 + HMLS PET 550x1, 500 tpm S(Z) + 500 tpm S(Z), 500 tpm Z(S) aufweist. Die Filamente eines jeden Rayon-Multifilamentgarnes weisen einen Filament-Titer von 2,4 dtex auf. Die Bruchfestigkeit eines Rayon-Multifilamentgarnes liegt im Bereich von ≥ 45 cN/tex bis ≤ 53 cN/tex. Jedes Rayon-Multifilamentgarn weist eine Bruchdehnung im Bereich von ≥ 6 % und ≤ 15 % auf.

Abgesehen davon unterliegt die Art oder Aufmachung der cellulosischen Fasern keinen Beschränkungen. So kann das Viskose-Multifilamentgarn als solches oder als Faserkurzschnitt zu einem Festigkeitsträger, zu einem Gewebe oder Gewirke verarbeitet sein. Auch ist es möglich, den das Viskose-Multifilamentgarn enthaltenden Festigkeitsträger direkt zur Herstellung eines Reifens einzusetzen.

Die nachfolgende Tabelle 1 gibt eine beispielhafte Übersicht über die Parameter von bevorzugten, erfindungsgemäßen Hybridkorden.

Tab. 1

| **Beispiel/ Parameter** | **1** | **2** | **3** |
|---|---|---|---|
| Material | Rayon + PA66 | Rayon + Aramid | Rayon + Aramid + Rayon |
| Kordkonstruktion | 780x1+700x1 | 620x1+550x1 | 620x1+550x1+620x1 |
| Drehungen [Tpm] | 450 | 600 | 600 |
| Bruchkraft [N] | 72 | 97 | 115 |
| Bruchdehnung [%] | 10 | 6,6 | 8,5 |
| Dehnung @ 45N [%] | 6 | 4 | 3,2 |
| Durchmesser [mm] | 0,48 | 0,40 | 0,50 |

Das Diagramm 1 zeigt Kraft-Dehnungskurven des in Tabelle 1 beschriebenen erfindungsgemäßen Hybridkordes 1 (Rayon 780 + PA66 700) und eines Kordes des Standes der Technik (PA66 940x2).

Der erfindungsgemäße Hybridkord 1 wird beispielsweise bevorzugt in der Gürtelbandage eines Fahrzeugluftreifens eingesetzt. Der E-Modul des Hybridkordes ist durch das Rayon-Multifilamentgarn vorteilhafterweise vergleichsweise hoch, während PA66 für den für die Gürtelbandagenanwendung notwendigen Schrumpf-Effekt verantwortlich ist.

Das Diagramm 2 zeigt Kraft-Dehnungskurven der in Tabelle 1 beschriebenen erfindungsgemäßen Hybridkorde 2 und 3 (Rayon 620 + Aramid 550) und (Rayon 620 + Aramid 550 + Rayon 620) sowie eines Kordes des Standes der Technik (Rayon 1220x2).

Die erfindungsgemäßen Hybridkorde 2, 3 weisen zwar kleinere E-Moduln als der Kord des Standes der Technik auf, jedoch sind die Korddurchmesser vorteilhaft gering. Durch eine Optimierung, vorzugsweise Erhöhung der Korddichte in einer diese Hybridkorde aufweisenden Gewebelage kann die gewünschte Steifigkeit bei geringer Lagendicke erreicht werden. Rayon und Aramid sind stabile, keinen Schrumpf aufweisende Materialien.

Die Kraft-Dehnungs-Messungen sind in Anlehnung an die ASTM D885 durchgeführt.

## Patentansprüche

1. Hybridkord aus wenigstens zwei miteinander verdrehten Multifilamentgarnen, wobei das erste Multifilamentgarn ein Viskose-Multifilamentgarn ist und wobei das weitere Multifilamentgarn ein Nicht-metallisches-Multifilamentgarn ist, welches aus Material besteht, das nicht mit dem ersten Multifilamentgarn identisch ist, **dadurch gekennzeichnet, dass** das Viskose-Multifilamentgarn im Normklima gemäß DIN EN ISO 139-1:2005 konditioniert wurde und danach einen Garntiter < 1100 dtex und eine Bruchfestigkeit von ≥ 45 cN/tex aufweist sowie dass der Hybridkord einen Kordtiter ≤ 3000 dtex aufweist.

2. Hybridkord gemäß Anspruch 1, **dadurch gekennzeichnet, dass** das weitere Multifilamentgarn einen Garntiter im Bereich von ≥ 50 und ≤ 1800 dtex, vorzugsweise im Bereich von ≥ 200 und ≤ 1200 dtex, besonders bevorzugt im Bereich von ≥ 250 und ≤ 800 dtex aufweist.

3. Hybridkord gemäß Anspruch 1 oder 2, **dadurch gekennzeichnet, dass** der Hybridkord einen Kordtiter ≤ 2500 dtex, bevorzugt ≤ 2000 dtex aufweist.

4. Hybridkord gemäß einem oder mehreren der vorangehenden Ansprüche, **dadurch gekennzeichnet, dass** das Viskose-Multifilamentgarn einen Garntiter im Bereich von ≥ 150 dtex bis < 1100 dtex, bevorzugt im Bereich von ≥ 170 dtex bis < 900 dtex und eine Bruchfestigkeit im Bereich von ≥ 45 cN/tex bis ≤ 60 cN/tex, bevorzugt im Bereich von ≥ 45 cN/tex bis ≤ 56 cN/tex aufweist.

5. Hybridkord gemäß Anspruch 4, **dadurch gekennzeichnet, dass** das Viskose-Multifilamentgarn einen Garntiter im Bereich von ≥ 200 dtex bis < 800 dtex und eine Bruchfestigkeit im Bereich von ≥ 45 cN/tex bis ≤ 53 cN/tex aufweist.

6. Hybridkord nach einem oder mehreren der Ansprüche 1 bis 5, **dadurch gekennzeichnet, dass** das Viskose-Multifilamentgarn einen Filament-Titer im Bereich von 1,2 und 4,0 dtex, bevorzugt im Bereich von 2,4 und 3,0 dtex aufweist.

7. Hybridkord gemäß einem oder mehreren der Ansprüche 1 bis 6, **dadurch gekennzeichnet, dass** das Viskose-Multifilamentgarn eine Bruchdehnung im Bereich von ≥ 5 % und ≤ 20 %, bevorzugt im Bereich von ≥ 6 % und ≤ 15 % aufweist.

8. Hybridkord gemäß einem oder mehreren der vorangehenden Ansprüche, **dadurch gekennzeichnet, dass** das weitere Nicht-metallische Multifilamentgarn ein Aramid-Multifilamentgarn und/oder ein Polyamid-Multifilamentgarn, vorzugsweise ein PA66-Multifilamentgarn ist.

9. Hybridkord gemäß einem oder mehreren der vorangehenden Ansprüche 1 bis 6, **dadurch gekennzeichnet, dass** das weitere Nicht-metallische Multifilamentgarn ein Polyester-Multifilamentgarn, vorzugsweise ein PET-Multifilamentgarn, besonders bevorzugt ein High Modulus Low Shrinkage-PET-Multifilamentgarn ist.

10. Hybridkord gemäß einem oder mehreren der vorangehenden Ansprüche, **dadurch gekennzeichnet, dass** das weitere Nicht-metallische Multifilamentgarn einen Garntiter im Bereich von ≥ 50 und ≤ 1800 dtex, vorzugsweise im Bereich von ≥ 250 und ≤ 800 dtex aufweist.

11. Hybridkord gemäß einem oder mehreren der vorangehenden Ansprüche, **dadurch gekennzeichnet, dass** das erste Viskose-Multifilamentgarn ein Rayon-Multifilamentgarn ist und dass das weitere Multifilamentgarn ein PA66-Multifilamentgarn ist, wobei der Hybridkord die Konstruktion Rayon 780x1 + PA66 700x1, vorzugsweise verdreht mit 450 tpm S(Z) + 450 tpm S(Z), 450 tpm Z(S) aufweist.

12. Hybridkord gemäß einem oder mehreren der vorangehenden Ansprüche, **dadurch gekennzeichnet, dass** das erste Viskose-Multifilamentgarn ein Rayon-Multifilamentgarn ist und dass das weitere Multifilamentgarn ein Aramid-Multifilamentgarn ist, wobei der Hybridkord die Konstruktion Rayon 620x1 + Aramid 550x1, vorzugsweise verdreht mit 600 tpm S(Z) + 600 tpm S(Z), 600 tpm Z(S) aufweist.

13. Hybridkord gemäß einem oder mehreren der vorangehenden Ansprüche, **dadurch gekennzeichnet, dass** das erste Viskose-Multifilamentgarn ein Rayon-Multifilamentgarn ist, dass das zweite Multifilamentgarn ein Aramid-Multifilamentgarn ist und dass das dritte Multifilamentgarn ein mit dem ersten Multifilamentgarn identisches Rayon-Multifilamentgarn ist, wobei der Hybridkord die Konstruktion Rayon 620x1 + Aramid 550x1 + Rayon 620x1, vorzugsweise verdreht mit 600 tpm S(Z) + 600 tpm S(Z), 600 tpm Z(S) aufweist.

Diagramm 1

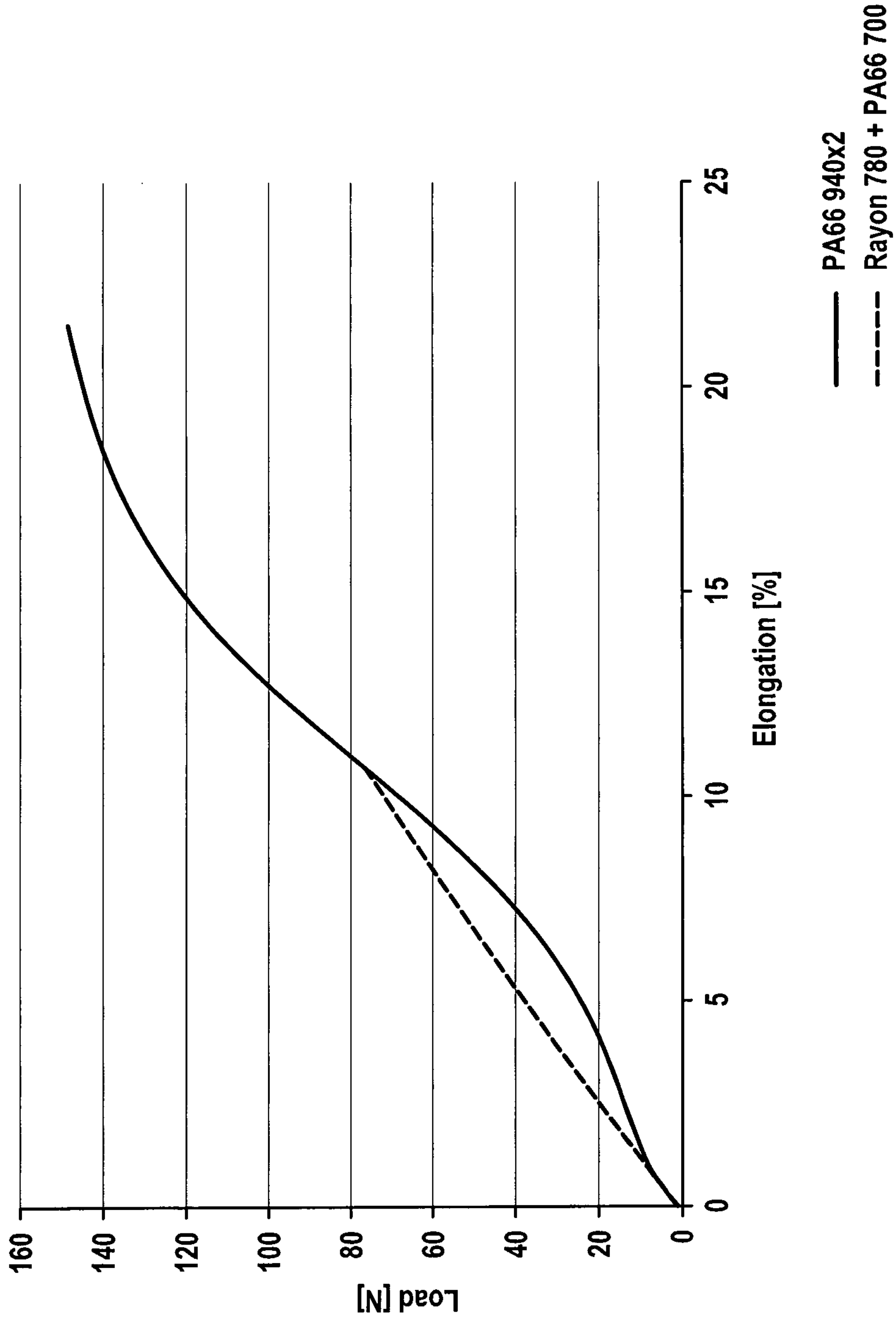
Load [N]
160
140
120
100
80
60
40
20
0
0
5
10
15
20
25
Elongation [%]
PA66 940x2
Rayon 780 + PA66 700

## Diagramm 2

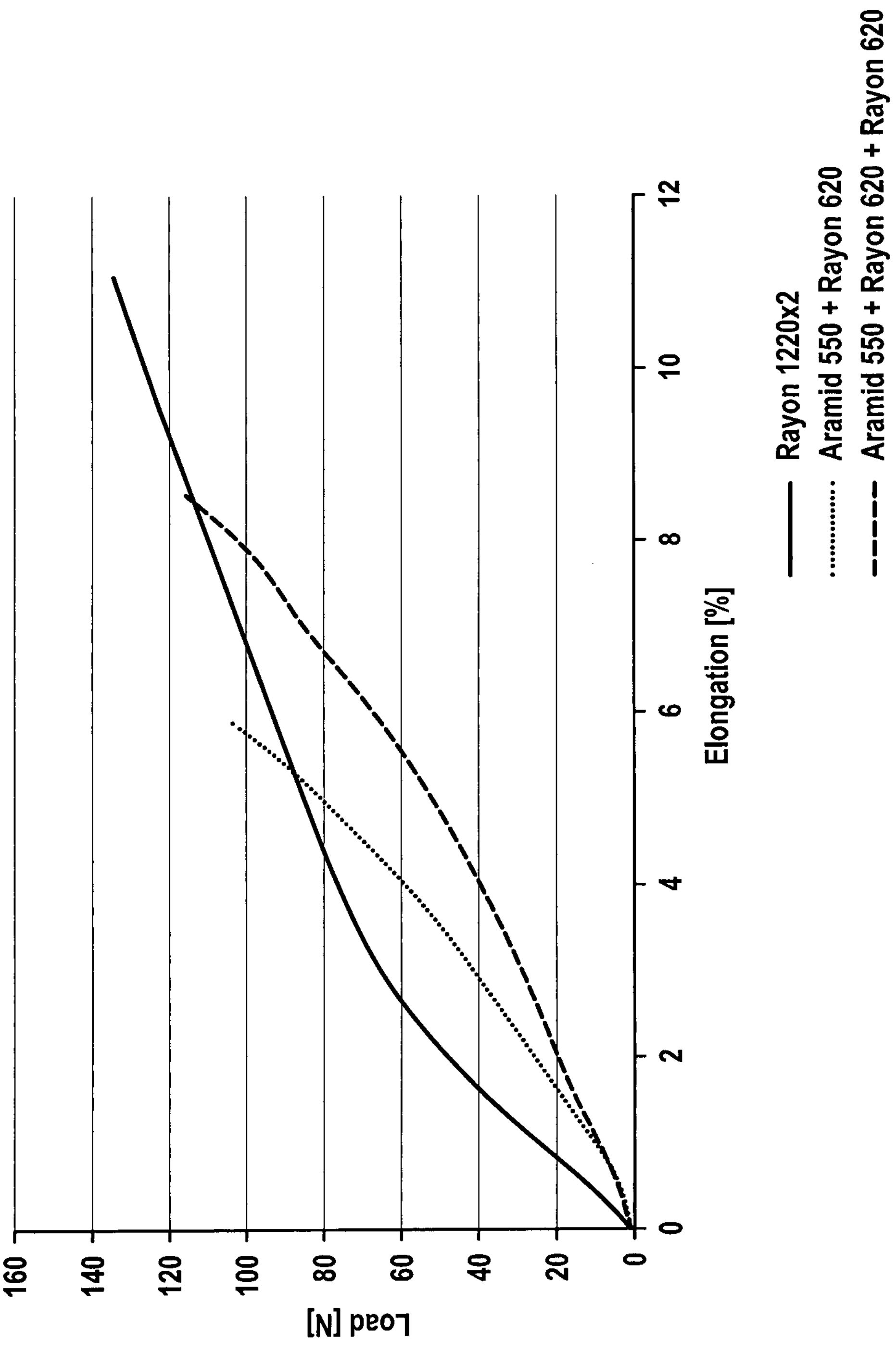
Load [N]
160
140
120
100
80
60
40
20
0
0
2
4
6
8
10
12
Elongation [%]
Rayon 1220x2
Aramid 550 + Rayon 620
Aramid 550 + Rayon 620 + Rayon 620

Europäisches Patentamt
European Patent Office
Office européen des brevets

# EUROPÄISCHER RECHERCHENBERICHT

Nummer der Anmeldung
EP 13 15 9780

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 380 754 A2 (GOODYEAR TIRE & RUBBER [US]) 26. Oktober 2011 (2011-10-26)<br>* das ganze Dokument *<br>----- | 1-13 | INV.<br>D02G3/02<br>D01F2/06 |
| A | DE 10 2007 025490 A1 (CONTINENTAL AG [DE]) 4. Dezember 2008 (2008-12-04)<br>* das ganze Dokument *<br>----- | 1-13 | |
| A,D | US 3 388 117 A (RONALD ROBERTS ET AL) 11. Juni 1968 (1968-06-11)<br>* das ganze Dokument *<br>----- | 1-13 | |
| | | | RECHERCHIERTE SACHGEBIETE (IPC) |
| | | | D01F<br>D02G<br>B60C |

Der vorliegende Recherchenbericht wurde für alle Patentansprüche erstellt

1

| Recherchenort | Abschlußdatum der Recherche | Prüfer |
|---|---|---|
| München | 23. Juli 2013 | Lux, Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 15 9780

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2013

| Im Recherchenbericht angeführtes Patentdokument | Datum der Veröffentlichung | Mitglied(er) der Patentfamilie | Datum der Veröffentlichung |
|---|---|---|---|
| EP 2380754 A2 | 26-10-2011 | EP 2380754 A2 | 26-10-2011 |
| | | US 2011259501 A1 | 27-10-2011 |
| DE 102007025490 A1 | 04-12-2008 | DE 102007025490 A1 | 04-12-2008 |
| | | WO 2008145421 A1 | 04-12-2008 |
| US 3388117 A | 11-06-1968 | AT 259129 B | 27-12-1967 |
| | | BE 645841 A | 16-07-1964 |
| | | CH 428084 A | 15-01-1967 |
| | | DE 1494559 A1 | 04-06-1969 |
| | | GB 1074131 A | 28-06-1967 |
| | | LU 45764 A1 | 27-05-1964 |
| | | NL 6403353 A | 29-09-1964 |
| | | US 3388117 A | 11-06-1968 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102009003359 A1
- US 6261689 B
- US 3388117 A
- GB 685631 B
- GB 685631 A